# EUROPEAN PATENT SPECIFICATION

(11) **EP 2 774 742 B1**
(45) Date of publication and mention of the grant of the patent: **19.05.2021**
(21) Application number: 14156527.5
(22) Date of filing: 25.02.2014
(51) Int. Cl.: B29C 45/83

(54) **Injection molding machine**
Spritzgießmaschine
Machine de moulage à injection

(30) Priority: 07.03.2013 JP 2013045734
(43) Date of publication of application: 10.09.2014
(73) Proprietor: SUMITOMO HEAVY INDUSTRIES, LTD., Tokyo 141-6025 (JP)
(72) Inventor: Hatakeyama, Takuro, Chiba 263-0001 (JP); Tokui, Yosuke, Chiba 263-0001 (JP); Matsutake, Yoshitaka, Chiba 263-0001 (JP)
(74) Representative: Hoffmann Eitle

(56) References cited:
- EP-A1- 2 540 472
- WO-A1-2007/036243
- WO-A1-2007/036244
- DE-A1-102008 057 073
- DE-A1-102010 051 766
- JP-A- 2002 028 961

## Description

### BACKGROUND OF THE INVENTION

### 1. Field of the Invention

The present invention relates to an injection molding machine.

### 2. Description of the Related Art

The basic motion of an injection molding machine is a linear motion, and a ball screw mechanism is used for converting the rotational motion of the motor into a linear motion (see, for example, Patent Document 1). The ball screw mechanism is constituted by, for example, a ball screw shaft, a ball screw nut, and a ball.

### [Patent Document]

[Patent Document 1] Japanese Unexamined Patent Publication No. 2004-249637

There are cases where a shaft bearing is provided around the ball screw mechanism. In the related art, the total usage amount of lubricant used in the ball screw mechanism and the shaft bearing has been large.

Additionally, EP 2 540 472 A1 discloses an injection device including a rotary slide member formed into a cylindrical shape and provided with a first spline on an outer periphery thereof, one side of which is connected with a screw and the other side of which is connected with a ball screw connected with an injection motor, a plasticizing motor provided to surround the rotary slide member, having a second spline adapted to engage with the first spline and to rotate the rotary slide member, wherein the rotary slide member includes at least one supply passage to supply lubricant from an inside of the rotary slide member to an engagement location of the first spline and the second spline.

WO 2007/036244 A1 discloses a closing unit for an injection molding machine, comprising joints, a lubricant supply system for lubricating the joints with a liquid lubricant, especially lubricating oil, and having a first lubrication cycle, and at least one spindle drive having a spindle and a spindle nut, engaged therewith, especially for actuating a toggle drive or an ejector, wherein a lubricant supply system for lubricating the spindle/spindle nut combination having a second lubrication cycle is provided.

WO 2007/036243 A1 discloses a spindle drive for an injection molding machine with a lubricating device of the lubricant bath type, said spindle drive having a spindle nut and a spindle, wherein at least in the area of relative movement between the spindle and the spindle nut, a lubricant reservoir for receiving a liquid lubricant is provided and substantially encloses the spindle, one end of the lubricant reservoir being at least partially configured by the spindle nut and the other end by a bearing or retaining area of the spindle.

DE 10 2010 051 766 A1 discloses a spindle drive for an injection molding machine, the spindle drive comprising a spindle, a spindle nut, a lubrication portion between spindle and spindle nut and a sealing portion, wherein a first lubricant seal is provided at one and of the lubrication portion, and a second lubricant seal is provided at the same end of the lubrication portion, and wherein a lubricant drain is provided between the first and the second lubricant seal.

DE 10 2008 057 073 A1 discloses a drive unit for an injection molding machine, the drive unit having a linearly movable drive and a cover for a movable part of said drive, wherein a volume-variable space between the movable part and the cover comprises lubricant, wherein the volume-variable space communicates with a volume-variable container, and wherein the cover has an opening for communication between the volume-variable container and the volume-variable space.

### SUMMARY OF THE INVENTION

The present invention is made in light of the above problems, and provides an injection molding machine capable of reducing the total usage amount of lubricant used in a ball screw mechanism and a shaft bearing according to claim 1.

### BRIEF DESCRIPTION OF THE DRAWINGS

Other objects, features and advantages of the present invention will become more apparent from the following detailed description when read in conjunction with the accompanying drawings.
FIG. 1 is a partial cross-sectional view illustrating a mold clamping unit and an ejector unit of an injection molding machine;
FIG. 2 is a partial cross-sectional view of an injection unit of an injection molding machine according to a first embodiment of the present invention; and
FIG. 3 is a partial cross-sectional view of an injection unit of an injection molding machine according to a second embodiment of the present invention.

### DETAILED DESCRIPTION OF THE PREFERRED EMBODIMENTS

A description is given, with reference to the accompanying drawings, of embodiments of the present invention. In the drawings, the same or corresponding components are given the same reference numerals, and repetitive explanations are omitted.

### (First embodiment)

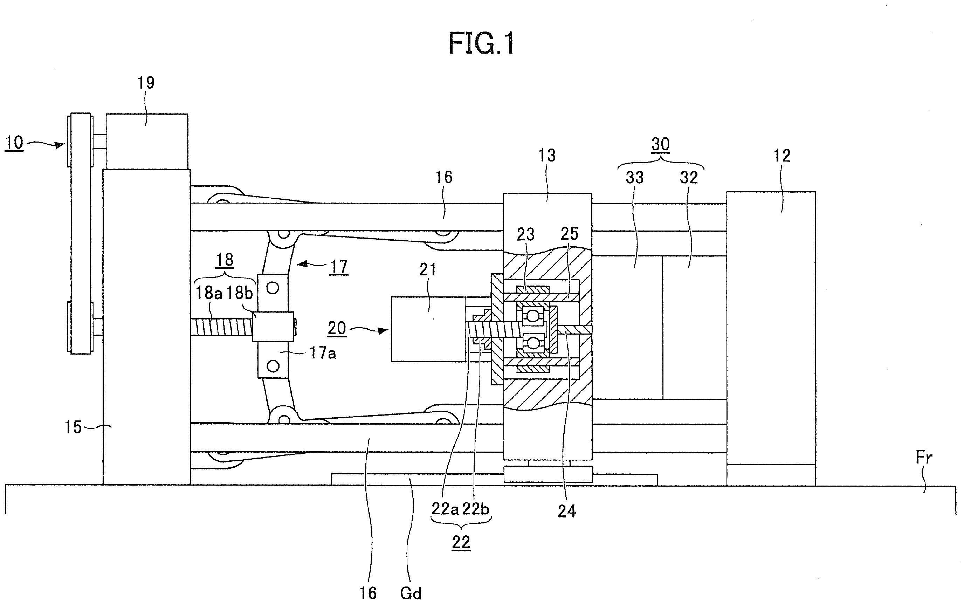

FIG. 1 is a partial cross-sectional view illustrating a mold clamping unit and an ejector unit of an injection molding machine according to an embodiment, which does not form part of the present invention. In the descriptions of the mold clamping unit and the ejector unit, the movement direction of a movable platen in the mold opening process is referred to as a forward direction, and the movement direction of a movable platen in the mold closing process is referred to as a backward direction.

A mold clamping unit 10 is for performing mold closing, mold clamping, and mold opening. For example, as illustrated in FIG. 1, the mold clamping unit 10 includes a stationary platen 12, a movable platen 13, a rear platen 15, a tie bar 16, a toggle mechanism 17, a mold clamping ball screw mechanism 18, and a mold clamping motor 19.

The stationary platen 12 may be fixed to a frame Fr. The rear platen 15 is disposed so as to be spaced apart from the stationary platen 12. The rear platen 15 and the stationary platen 12 are joined by a plurality (for example, four) of the tie bars 16. In order to allow the tie bars 16 to extend when performing the mold clamping, the rear platen 15 is placed so as to be capable of advancing and retreating with respect to the frame Fr.

The movable platen 13 is disposed between the stationary platen 12 and the rear platen 15, and is capable of advancing and retreating along a guide Gd laid on the frame Fr. On the side of the movable platen 13 facing the stationary platen 12, a movable mold 33 is attached. Meanwhile, on the side of the stationary platen 12 facing the movable platen 13, a stationary mold 32 is attached. The stationary mold 32 and the movable mold 33 constitute a mold unit 30. When the movable platen 13 advances, the movable mold 33 and the stationary mold 32 contact each other, and mold closing is performed. Furthermore, when the movable platen 13 retreats, the movable mold 33 and the stationary mold 32 part from each other, and mold opening is performed.

The toggle mechanism 17 is disposed between the movable platen 13 and the rear platen 15. For example, the toggle mechanism 17 is constituted by a cross head 17a capable of advancing and retreating with respect to the frame Fr, and a plurality of links for transmitting, to the movable platen 13, a thrust which is input to the cross head 17a. The toggle mechanism 17 generates a mold clamping force obtained by multiplying the thrust of the cross head 17a by a toggle magnification.

The mold clamping ball screw mechanism 18 converts the rotational motion of the mold clamping motor 19 into a linear motion, and transmits the linear motion to the toggle mechanism 17. The mold clamping ball screw mechanism 18 is constituted by a mold clamping ball screw shaft 18a and a mold clamping ball screw nut 18b. The mold clamping ball screw shaft 18a is joined to an output shaft of the mold clamping motor 19 via a belt and a pulley; however, the mold clamping ball screw shaft 18a may be coaxially joined to the output shaft. A shaft bearing that rotatably supports the mold clamping ball screw shaft 18a is held by the rear platen 15, and the mold clamping ball screw nut 18b is fixed to the cross head 17a.

The mold clamping motor 19 rotates the mold clamping ball screw shaft 18a, to cause the mold clamping ball screw nut 18b to advance and retreat, so that the cross head 17a advances and retreats, and the toggle mechanism 17 is activated. As the movable platen 13 advances and retreats, the mold closing, mold clamping, and mold opening are performed.

Note that the mold clamping ball screw mechanism 18 may have various configurations. For example, the mold clamping ball screw nut 18b may be fixed to the rear platen 15, and a shaft bearing rotatably supporting the shaft part extending in the forward direction from the mold clamping ball screw shaft 18a may be fixed to the cross head 17a. For example, the shaft part extending in the backward direction from the mold clamping ball screw shaft 18a is splined to the output shaft of the mold clamping motor 19. The mold clamping motor 19 rotates the mold clamping ball screw shaft 18a and also moves the mold clamping ball screw shaft 18a in the shaft direction, and causes the cross head 17a to advance and retreat.

An ejector unit 20 is for ejecting the molding product from the mold unit 30 that is in a mold open state. The ejector unit 20 is constituted by an ejector motor 21, an ejector ball screw mechanism 22, a shaft bearing holder 23, and an ejector rod 24.

The ejector ball screw mechanism 22 converts the rotational motion of the ejector motor 21 into a linear motion, and transmits the linear motion to the shaft bearing holder 23. The ejector ball screw mechanism 22 is constituted by an ejector ball screw shaft 22a, an ejector ball screw nut 22b, etc. The shaft part extending in the backward direction from the ejector ball screw shaft 22a is splined to the output shaft of the ejector motor 21, rotates together with the output shaft of the ejector motor 21, and moves in the shaft direction with respect to the output shaft of the ejector motor 21. The ejector ball screw nut 22b is fixed to the movable platen 13.

Note that the ejector ball screw mechanism 22 may have various configurations. For example, by the rotation of the ejector ball screw shaft 22a, the ejector ball screw nut 22b may advance and retreat.

The shaft bearing holder 23 holds a shaft bearing that rotatably supports a shaft part extending in the forward direction from the ejector ball screw shaft 22a, and moves together with the ejector ball screw shaft 22a. The shaft bearing holder 23 is stopped from rotating by a guide bar 25. The guide bar 25 is fixed to the movable platen 13, and guides the advancing and the retreating of the shaft bearing holder 23.

The ejector rod 24 advances and retreats together with the shaft bearing holder 23, and pushes an ejecting member disposed in the movable mold 33 to eject the molding product from the movable mold 33.

The ejector motor 21 rotates the ejector ball screw shaft 22a, and also causes the ejector ball screw shaft 22a to advance and retreat in the shaft direction, and causes the shaft bearing holder 23 and the ejector rod 24 to advance and retreat. The ejector motor 21 may be a servo motor. The case of the ejector motor 21 is fixed to the movable platen 13.

Note that for the purpose of enhancing the ejecting properties of the ejector unit 20 (for example, the ejecting force, or the ejection speed), the ejector unit 20 may have a toggle mechanism. The toggle mechanism is provided between a slider that is movable with respect to the movable platen 13, and an ejector base fixed to the movable platen 13. The shaft bearing holder 23 has a role of a cross head of the toggle mechanism. The ejector rod 24 moves together with the slider; not with the shaft bearing holder 23.

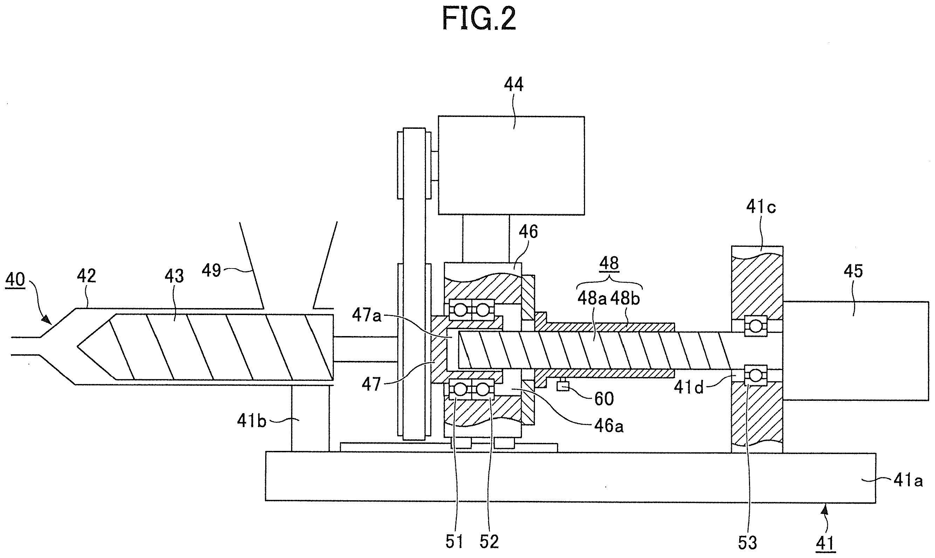

FIG. 2 is a partial cross-sectional view of an injection unit of an injection molding machine according to a first embodiment of the present invention. In the description of the injection unit, the movement direction of the screw in the filling process is referred to as a forward direction, and the movement direction of the screw in the plasticizing process is referred to as a backward direction.

An injection unit 40 is a unit for melting the molding material, plasticizing the molten molding material, and supplying the plasticized molding material to fill the mold unit 30 that is in a clamped mold state. The injection unit 40 is constituted by an injection frame 41, a cylinder 42, a screw 43, a plasticizing motor 44, an injection motor 45, and a lubricant supplying unit 60.

The injection frame 41 is constituted by a base 41a, a front support 41b, and a back support 41c. The front support 41b and the back support 41c are respectively fixed to the base 41a. Between the front support 41b and the back support 41c, a pressure plate 46 is disposed, which is movable with respect to the base 41a.

The cylinder 42 melts the molding material. The back part of the cylinder 42 is held by the front support 41b. At the back part of the cylinder 42, there is provided a hopper 49, which is a material supplying unit for supplying the molding material (for example, molding material pellets) inside the cylinder 42. Note that the material supplying unit of the present embodiment is constituted by the hopper 49; however, the material supplying unit may be constituted by a feed screw by which the supplying amount can be adjusted.

The screw 43 is disposed so as to be rotatable and capable of advancing and retreating, inside the cylinder 42. A spiral groove is formed in the screw 43, and molding material is supplied into the groove from the hopper 49. When the screw 43 rotates, the molding material is sent in the forward direction along the spiral groove. The depth of the groove may be fixed, or may vary according to the position.

The plasticizing motor 44 rotates the screw 43 inside the cylinder 42. The rotation of the plasticizing motor 44 is transmitted to a driving shaft 47 via a belt and a pulley, and the screw 43 is rotated together with the driving shaft 47. Note that the belt and the pulley may not be provided, and the output shaft of the plasticizing motor 44 may be coaxially joined to the driving shaft 47.

The plasticizing motor 44 rotates the screw 43 in the plasticizing process, and sends forward the molding material, which has been supplied in the spiral groove formed in the screw 43. On the outer periphery of the cylinder 42, a plurality of band heaters are provided. The heat of the plurality of band heaters is transmitted to the cylinder 42. The transmitted heat gradually melts the molding material that is moving forward in the cylinder 42. The molten molding material is sent to the front of the screw 43. As the molten molding material is accumulated at the front of the cylinder 42, the screw 43 is caused to retreat. When a predetermined amount of the molding material is accumulated at the front of the screw 43, the plasticizing process is completed.

The injection motor 45 moves the screw 43 in the cylinder 42. The rotation of the injection motor 45 is transmitted to an injection ball screw mechanism 48.

The injection ball screw mechanism 48 converts the rotational motion of the injection motor 45 into a linear motion, and transmits the linear motion to the pressure plate 46. The injection ball screw mechanism 48 is constituted by an injection ball screw shaft 48a and an injection ball screw nut 48b. The injection ball screw shaft 48a is coaxially joined to the output shaft of the injection motor 45, but may be joined to the output shaft of the injection motor 45 via a belt and a pulley. The injection motor 45 is fixed to the back support 41c, and the back support 41c holds a shaft bearing 53 that rotatably supports a shaft part extending in the backward direction from the injection ball screw shaft 48a. Accordingly, the injection ball screw shaft 48a is incapable of advancing or retreating with respect to the injection frame 41. Meanwhile, the injection ball screw nut 48b is fixed to the pressure plate 46, and is capable of advancing and retreating with respect to the injection frame 41.

The injection motor 45 rotates the injection ball screw shaft 48a, moves the injection ball screw nut 48b in the shaft direction, and causes the pressure plate 46 to advance and retreat. In accordance with the advancing and retreating of the pressure plate 46, the driving shaft 47 and the screw 43 are caused to advance and retreat.

In the filling process, the injection motor 45 causes the screw 43 to advance at a set speed, and supplies the molding material that has accumulated at the front of the screw 43 in the plasticizing process, to fill the injection mold unit 30 from the cylinder 42. When the screw 43 advances to a predetermined position (so called V/P switching position), a hold pressure process is started. Note that the hold pressure process may be started when the elapsed time reaches a predetermined time from when the filling process has started. The set speed of the screw 43 may be fixed, or may vary according to the screw position.

In the hold pressure process, the injection motor 45 pushes forward the screw 43 at a set pressure, and replenishes the cylinder 42 with the molding material by an amount corresponding to the volume contracted due to the cooling of the molding material in the cavity space. After the inlet of the cavity space (so called gate) is sealed with the solidified molding material so that the molding material is prevented from flowing backward from the cavity space, the cooling process is started. During the cooling process, a plasticizing process of plasticizing the molding material for the next molding product may be performed. The set pressure of the screw 43 may be fixed, or may vary according to the elapsed time.

The lubricant supplying unit 60 supplies lubricant, which is to be supplied to shaft bearings 51 through 53, to the injection ball screw mechanism 48 before supplying the lubricant to the shaft bearings 51 through 53. The shaft bearings 51 through 53 to which the lubricant is to be supplied, are coaxially provided with the injection ball screw shaft 48a. The shaft bearings 51 through 53 may have a receiving inlet for receiving the lubricant from the injection ball screw shaft 48a. The receiving inlet is constituted by, for example, a gap between the inner ring and the outer ring. The type of lubricant may be either lubricating oil or grease.

For example, the lubricant supplying unit 60 is provided at the injection ball screw nut 48b, and is constituted by a joint for connecting a pipe extending from a tank acting as a supply source for supplying the lubricant, and the injection ball screw nut 48b. The tank may be fixed to the injection frame 41. The injection ball screw nut 48b does not rotate, and therefore the pipe does not become twisted. The lubricant passes through a flow path formed in the injection ball screw nut 48b, and is supplied between the injection ball screw nut 48b and the injection ball screw shaft 48a.

As described above, the lubricant supplying unit 60 supplies the lubricant to the injection ball screw mechanism 48, and the supplied lubricant lubricates a part between the injection ball screw shaft 48a and the injection ball screw nut 48b. When the injection motor (rotation driving unit) 45 rotates the injection ball screw shaft 48a, the lubricant moves along the injection ball screw shaft 48a, and is carried outside the injection ball screw nut 48b (in both the left and right directions as viewed in FIG. 2). The lubricant, which has been carried outside the injection ball screw nut 48b, is separated from the injection ball screw shaft 48a by a centrifugal force, and the lubricant can be supplied to each of the shaft bearings 51 through 53 coaxially provided with the injection ball screw shaft 48a. The lubricant, which lubricates the injection ball screw mechanism 48, also lubricates the respective shaft bearings 51 through 53, and therefore the total usage amount of lubricant used for the injection ball screw mechanism 48 and the shaft bearings 51 through 53 can be reduced.

Note that an exclusively-used lubricant may be supplied to each of the shaft bearings 51 through 53, in addition to the lubricant for lubricating the injection ball screw mechanism 48. In this case also, the total usage amount of lubricant can be reduced.

Each of the respective shaft bearings 51 through 53 may be, for example, a rolling bearing, constituted by an outer ring, an inner ring, and a rolling body such as balls that are disposed between the outer ring and the inner ring. The external diameter of each inner ring may be larger than the external diameter of the injection ball screw shaft 48a. The lubricant that has separated from the injection ball screw shaft 48a by the centrifugal force can be easily supplied to the rolling bodies of the shaft bearings 51 through 53. Note that the rolling body of the rolling bearing may be rollers instead of balls. Furthermore, the shaft bearings 51 through 53 may be sliding bearings.

The shaft bearings 51, 52 may have a shaft bearing hole through which the driving shaft 47 is inserted, and the driving shaft 47 may have an insertion hole 47a through which the injection ball screw shaft 48a can be inserted. According to the advancing and retreating of the driving shaft 47, the injection ball screw shaft 48a is inserted to and removed from the insertion hole 47a of the driving shaft 47. The injection ball screw shaft 48a is inserted to the shaft bearing hole of the shaft bearings 51, 52, and the lubricant that has separated from the injection ball screw shaft 48a by a centrifugal force can be easily supplied to the shaft bearings 51, 52.

In the pressure plate 46, a through hole 46a for inserting the injection ball screw shaft 48a is formed, and the shaft bearings 51, 52 of the driving shaft 47 are disposed inside the through hole 46a. The lubricant can easily accumulate inside the through hole 46a, and the lubricant can be easily supplied to the shaft bearings 51, 52.

The injection ball screw nut 48b is attached to the pressure plate 46. Another member may be disposed between the pressure plate 46 and the injection ball screw nut 48b, and a member surrounding the outer periphery of the injection ball screw shaft 48a is to be provided at the front of the injection ball screw nut 48b. The lubricant, which moves to the front of the injection ball screw nut 48b and separates from the injection ball screw shaft 48a by a centrifugal force, can be prevented from scattering to the surroundings.

In the back support 41c, a through hole 41d may be formed, into which a shaft part extending in the backward direction from the injection ball screw shaft 48a is inserted. The shaft bearing 53 of the shaft part may be disposed inside the through hole 41d. The lubricant can easily accumulate inside the through hole 41d, and the lubricant can be easily supplied to the shaft bearing 53.

### (Second embodiment)

The injection motor according to the first embodiment rotates the ball screw shaft, and moves the ball screw nut in the shaft direction. Meanwhile, the injection motor according to the present embodiment is different from that of the first embodiment in that the ball screw shaft is rotated, and the ball screw shaft is moved in the shaft direction. In the following, the different points are mainly described.

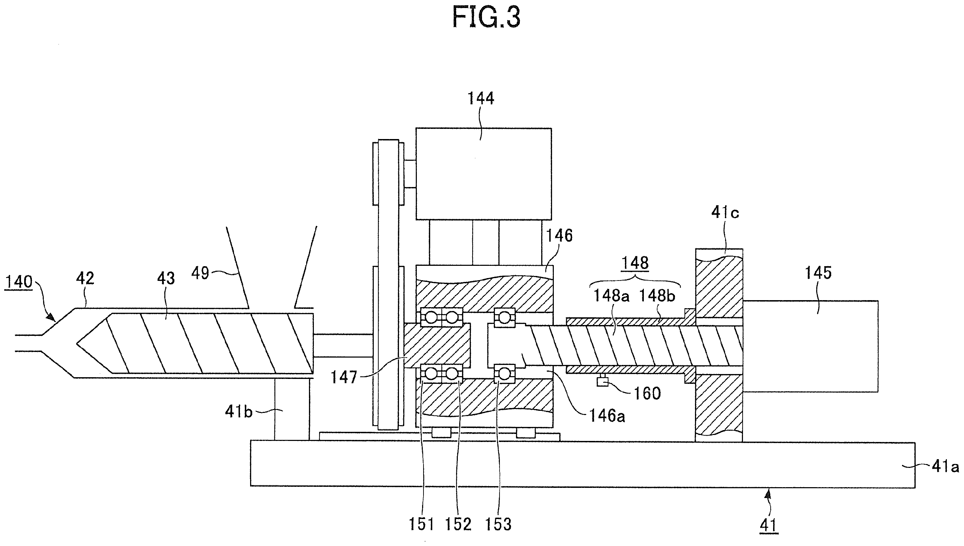

FIG. 3 is a partial cross-sectional view of an injection unit of an injection molding machine according to a second embodiment of the present invention. An injection unit 140 illustrated in FIG. 3 is constituted by an injection frame 41, a cylinder 42, a screw 43, a plasticizing motor 144, an injection motor 145, and a lubricant supplying unit 160.

The plasticizing motor 144 rotates the screw 43 in the cylinder 42. The rotation of the plasticizing motor 144 is transmitted to a driving shaft 147 via a belt and a pulley, and the screw 43 is rotated together with the driving shaft 147. Shaft bearings 151, 152 that rotatably support the driving shaft 147 are held by a pressure plate 146. Note that the belt and the pulley may not be provided, and the output shaft of the plasticizing motor 144 may be coaxially joined to the driving shaft 147.

The injection motor 145 moves the screw 43 in the cylinder 42. The injection motor 145 is fixed to the back support 41c. The rotation of the injection motor 145 is transmitted to an injection ball screw mechanism 148.

The injection ball screw mechanism 148 converts the rotational motion of the injection motor 145 into a linear motion, and transmits the linear motion to the pressure plate 146. The injection ball screw mechanism 148 is constituted by an injection ball screw shaft 148a and an injection ball screw nut 148b. The shaft part that extends in the backward direction from the injection ball screw shaft 148a is splined to the output shaft of the injection motor 145. Thus, the injection ball screw shaft 148a can advance and retreat in the shaft direction. Meanwhile, the injection ball screw nut 148b is fixed to the back support 41c, and cannot advance and retreat in the shaft direction.

The injection motor 145 rotates the injection ball screw shaft 148a and also moves the injection ball screw shaft 148a in the shaft direction, and causes the pressure plate 146 to advance and retreat. The pressure plate 146 holds a shaft bearing 153 that rotatably supports the shaft part that extends in the forward direction from the injection ball screw shaft 148a. In accordance with the advancing and retreating of the pressure plate 146, the driving shaft 147 and the screw 43 are caused to advance and retreat.

The lubricant supplying unit 160 supplies the lubricant, which is to be supplied to the shaft bearing 153, to the injection ball screw mechanism 148 before supplying the lubricant to the shaft bearing 153. The shaft bearing 153 for supplying the lubricant is coaxially provided with the injection ball screw shaft 148a. The shaft bearing 153 may have a receiving inlet for receiving the lubricant from the injection ball screw shaft 148a. The receiving inlet is constituted by, for example, a gap between the inner ring and the outer ring. The type of lubricant may be either lubricating oil or grease.

For example, the lubricant supplying unit 160 is provided at the injection ball screw nut 148b, and is constituted by a joint for connecting a pipe extending from a tank acting as a supply source for supplying the lubricant, and the injection ball screw nut 148b. The tank may be fixed to the injection frame 41. The injection ball screw nut 148b does not rotate, and therefore the pipe does not become twisted. Furthermore, the injection ball screw nut 148b does not advance or retreat with respect to the injection frame 41, and therefore the pipe does not bend, and a pipe made of metal may be used. The lubricant passes through a flow path formed in the injection ball screw nut 148b, and is supplied between the injection ball screw nut 148b and the injection ball screw shaft 148a.

As described above, the lubricant supplying unit 160 supplies the lubricant to the injection ball screw mechanism 148, and the supplied lubricant lubricates a part between the injection ball screw shaft 148a and the injection ball screw nut 148b. When the injection motor (rotation driving unit) 145 rotates the injection ball screw shaft 148a, the lubricant moves along the injection ball screw shaft 148a, and is carried outside the injection ball screw nut 148b (in both the left and right directions as viewed in FIG. 3). The lubricant, which has been carried outside the injection ball screw nut 148b, separates from the injection ball screw shaft 148a by a centrifugal force, and the lubricant can be supplied to the shaft bearing 153 coaxially provided with the injection ball screw shaft 148a. The lubricant, which lubricates the injection ball screw mechanism 148, also lubricates the shaft bearing 153, and therefore the total usage amount of lubricant used for the injection ball screw mechanism 148 and the shaft bearing 153 can be reduced.

Note that an exclusively-used lubricant may be supplied to the shaft bearing 153, in addition to the lubricant for lubricating the injection ball screw mechanism 148. In this case also, the total usage amount of lubricant can be reduced.

The shaft bearing 153 may be, for example, a rolling bearing, constituted by an outer ring, an inner ring, a rolling body such as balls that are disposed between the outer ring and the inner ring. The external diameter of the inner ring may be larger than the external diameter of the injection ball screw shaft 148a. The lubricant that has separated from the injection ball screw shaft 148a by the centrifugal force can be easily supplied to the rolling body of the shaft bearing 153. Note that the rolling body of the rolling bearing may be rollers instead of balls. Furthermore, the shaft bearing 153 may be a sliding bearing.

In the pressure plate 146, a through hole 146a for inserting the injection ball screw shaft 148a is formed, and the shaft bearing 153 is disposed inside the through hole 146a. The lubricant can easily accumulate inside the through hole 146a, and the lubricant can be easily supplied to the shaft bearing 153.

Embodiments of the injection molding machine are described as above; however, the present invention is not limited to the specifically disclosed embodiments, and numerous variations and modifications may be made.

For example, the lubricant supplying units 60, 160 according to the above embodiments are for supplying lubricant to the injection ball screw mechanism 148; however, the lubricant supplying unit 60, 160 may be for supplying lubricant to the mold clamping ball screw mechanism 18 or the ejector ball screw mechanism 22.

Furthermore, the shaft bearing to which lubricant is supplied from the lubricant supplying units 60, 160 according to the above embodiments via the injection ball screw mechanisms 48, 148, is coaxially provided with the injection ball screw shafts 48a, 148a; however, the shaft bearing may be provided around the injection ball screw shafts 48a, 148a.

Furthermore, the injection units 40, 140 according to the above embodiments are screw in-line type injection units; however, the injection units 40, 140 may be preplasticizing type injection units.

Furthermore, the number of shaft bearings to which lubricant is supplied from a single ball screw mechanism is not particularly limited.

According to an embodiment, injection molding machine is provided, which is capable of reducing the total amount of lubricant used for a ball screw mechanism and a shaft bearing.

The present invention is not limited to the specifically disclosed embodiments, and numerous variations and modifications may be made without departing from the scope of the invention as it is defined by the appended claims.

## Claims

1. An injection molding machine comprising:
a ball screw shaft (48a) and a ball screw nut (48b) constituting a ball screw mechanism (48) for converting a rotational motion into a linear motion;
a rotation driving unit (45) configured to rotate the ball screw shaft (48a);
a shaft bearing (51, 52); and
a lubricant supplying unit (60) configured to supply lubricant, which is to be supplied to the shaft bearing (51, 52), to the ball screw mechanism (48) before supplying the lubricant to the shaft bearing (51, 52),
wherein the injection molding machine further comprises:
a driving shaft (47) and a motor (44), the rotation of which is transmitted to the driving shaft (47),
the injection molding machine further comprising a moveable member (46),
wherein in the moveable member (46), a through hole (46a) for inserting the injection ball screw shaft (48a) is formed, and the shaft bearing (51, 52) is disposed inside the through hole (46a).

2. The injection molding machine according to claim 1, wherein
the lubricant supplying unit (60) is provided on the ball screw nut (48b).

3. The injection molding machine according to claim 1 or 2, wherein
the rotation driving unit (45) rotates the ball screw shaft (48a), and moves the ball screw nut (48b, 148b) in an axial direction.

4. The injection molding machine according to claim 3, wherein:
the movable member (46) is configured to move together with the ball screw nut (48b), and
the lubricant supplying unit (60) supplies the lubricant, which is to be supplied to a shaft bearing (51, 52) attached to the movable member (46), to the ball screw mechanism before supplying the lubricant to the shaft bearing (51, 52) attached to the movable member (46).

5. The injection molding machine according to claim 3 or 4, wherein
the lubricant supplying unit (60) supplies the lubricant, which is to be supplied to a shaft bearing that rotatably supports a shaft part that extends from the ball screw shaft, to the ball screw mechanism before supplying the lubricant to the shaft bearing that rotatably supports the shaft part.

6. The injection molding machine according to claim 1 or 2, wherein
the rotation driving unit (45) rotates the ball screw shaft (48a), and moves the ball screw shaft (48a) in an axial direction.

7. The injection molding machine according to claim 6, wherein
the lubricant supplying unit (60) supplies the lubricant, which is to be supplied to a shaft bearing that rotatably supports a shaft part that extends from the ball screw shaft, to the ball screw mechanism before supplying the lubricant to the shaft bearing that rotatably supports the shaft part.

## Patentansprüche

1. Spritzgussmaschine, umfassend:
eine Kugelgewindespindel (48a) und eine Kugelgewindemutter (48b), die einen Kugelgewindemechanismus (48) zum Umwandeln von einer Drehbewegung in eine lineare Bewegung begründen;
eine Rotationsantriebseinheit (45), die dazu konfiguriert ist, die Kugelgewindespindel (48a) zu drehen;
ein Spindellager (51, 52); und
eine Schmiermittelversorgungseinheit (60), die dazu konfiguriert ist, Schmiermittel, das dem Spindellager (51, 52) zugeführt werden soll, dem Kugelgewindemechanismus (48) zuzuführen, bevor das Schmiermittel dem Spindellager (51, 52) zugeführt wird,
wobei die Spritzgussmaschine weiter umfasst:
eine Antriebswelle (47) und einen Motor (44), dessen Rotation an die Antriebswelle (47) übertragen wird,
wobei die Spritzgussmaschine weiter ein bewegliches Bauteil (46) umfasst,
wobei in dem beweglichen Bauteil (46) ein Durchlassloch (46a) zum Einsetzen der Einspritzkugelgewindespindel (48a) gebildet ist und das Spindellager (51, 52) innerhalb des Durchlasslochs (46a) angeordnet ist.

2. Spritzgussmaschine nach Anspruch 1, wobei
die Schmiermittelversorgungseinheit (60) auf der Kugelgewindemutter (48b) bereitgestellt ist.

3. Spritzgussmaschine nach Anspruch 1 oder 2, wobei
die Rotationsantriebseinheit (45) die Kugelgewindespindel (48a) dreht und die Kugelgewindemutter (48a, 148b) in einer axialen Richtung bewegt.

4. Spritzgussmaschine nach Anspruch 3, wobei:
das bewegliche Bauteil (46) dazu konfiguriert ist, sich gemeinsam mit der Kugelgewindemutter (48b) zu bewegen, und
die Schmiermittelversorgungseinheit (60) das Schmiermittel, das einem an dem beweglichen Bauteil (46) befestigten Spindellager (51, 52) zugeführt werden soll, dem Kugelgewindemechanismus zugeführt wird, bevor sie das Schmiermittel dem an dem beweglichen Bauteil (46) befestigten Spindellager (51, 52) zuführt.

5. Spritzgussmaschine nach Anspruch 3 oder 4, wobei
die Schmiermittelversorgungseinheit (60) das Schmiermittel, das einem Spindellager zugeführt werden soll, das ein Spindelteil, das sich von der Kugelgewindespindel erstreckt, drehbar stützt, dem Kugelgewindemechanismus zuführt, bevor sie das Schmiermittel dem Spindellager zuführt, das den Spindelteil drehbar stützt.

6. Spritzgussmaschine nach Anspruch 1 oder 2, wobei
die Rotationsantriebseinheit (45) die Kugelgewindespindel (48a) dreht und die Kugelgewindespindel (48a) in einer axialen Richtung bewegt.

7. Spritzgussmaschine nach Anspruch 6, wobei
die Schmiermittelversorgungseinheit (60), die das Schmiermittel, das einem Spindellager zugeführt werden soll, das ein Spindelteil, das sich von der Kugelgewindespindel erstreckt, drehbar stützt, dem Kugelgewindemechanismus zuführt, bevor sie das Schmiermittel dem Spindellager zuführt, das den Spindelteil drehbar stützt.

## Revendications

1. Machine de moulage par injection comprenant :
un arbre de vis à billes (48a) et un écrou de vis à billes (48b) constituant un mécanisme de vis à billes (48) pour convertir un mouvement de rotation en un mouvement linéaire ;
une unité d'entraînement en rotation (45) configurée pour faire tourner l'arbre de vis à billes (48a) ;
un palier d'arbre (51, 52) ; et
une unité de fourniture de lubrifiant (60) configurée pour fournir du lubrifiant, qui doit être fourni au palier d'arbre (51, 52), au mécanisme de vis à billes (48) avant de fournir le lubrifiant au palier d'arbre (51, 52),
dans laquelle la machine de moulage par injection comprend en outre :
un arbre d'entraînement (47) et un moteur (44) dont la rotation est transmise à l'arbre d'entraînement (47),
la machine de moulage par injection comprenant en outre un élément mobile (46),
dans laquelle un trou traversant (46a) pour insérer l'arbre de vis à billes d'injection (48a) est formé dans l'élément mobile (46), et le palier d'arbre (51, 52) est disposé à l'intérieur du trou traversant (46a).

2. Machine de moulage par injection selon la revendication 1, dans laquelle l'unité de fourniture de lubrifiant (60) est prévue sur l'écrou de vis à billes (48b).

3. Machine de moulage par injection selon la revendication 1 ou 2, dans laquelle
l'unité d'entraînement en rotation (45) fait tourner l'arbre de vis à bille (48a) et déplace l'écrou de vis à bille (48b, 148b) dans une direction axiale.

4. Machine de moulage par injection selon la revendication 3, dans laquelle :
l'élément mobile (46) est configuré pour se déplacer conjointement avec l'écrou de vis à billes (48b), et
l'unité de fourniture de lubrifiant (60) fournit le lubrifiant, qui doit être fourni à un palier d'arbre (51, 52) fixé à l'élément mobile (46), au mécanisme de vis à billes avant de fournir le lubrifiant au palier d'arbre (51, 52) fixé à l'élément mobile (46).

5. Machine de moulage par injection selon la revendication 3 ou 4, dans laquelle
l'unité de fourniture de lubrifiant (60) fournit le lubrifiant, qui doit être fourni à un palier d'arbre qui supporte de manière rotative une partie d'arbre qui s'étend à partir de l'arbre de vis à billes, au mécanisme de vis à billes avant de fournir le lubrifiant au palier d'arbre qui supporte de manière rotative la partie d'arbre.

6. Machine de moulage par injection selon la revendication 1 ou 2, dans laquelle
l'unité d'entraînement en rotation (45) fait tourner l'arbre de vis à billes (48a), et déplace l'arbre de vis à billes (48a) dans une direction axiale.

7. Machine de moulage par injection rotative selon la revendication 6, dans laquelle
l'unité de fourniture de lubrifiant (60) fournit le lubrifiant, qui doit être fourni à un palier d'arbre qui supporte de manière rotative une partie d'arbre qui s'étend à partir de l'arbre de vis à billes, au mécanisme de vis à billes avant de fournir le lubrifiant au palier d'arbre qui supporte de manière rotative la partie d'arbre.
